# EUROPEAN PATENT APPLICATION

(11) **EP 4 477 318 A1**
(43) Date of publication of application: **18.12.2024**
(21) Application number: 23774433.9
(22) Date of filing: 02.03.2023
(51) Int. Cl.: B02C 17/16, B01J 37/02, B01J 37/04

(54) **MANUFACTURING METHOD FOR SLURRY AND MANUFACTURING METHOD FOR EXHAUST GAS PURIFICATION CATALYST**

(30) Priority: 24.03.2022 JP 2022048385
(71) Applicant: CATALER CORPORATION, Kakegawa-shi, Shizuoka 437-1492 (JP)
(72) Inventor: OHARA, Etsuko, Kakegawa-shi, Shizuoka 437-1492 (JP); SHIMIZU, Michio, Kakegawa-shi, Shizuoka 437-1492 (JP); OKUBO, Atsutaka, Kakegawa-shi, Shizuoka 437-1492 (JP)
(74) Representative: Kramer Barske Schmidtchen Patentanwälte PartG mbB
(86) International application number: PCT/JP2023/007815
(87) International publication number: WO 2023/181834

(57) **Abstract**

The present disclosure provides a method for preparing a slurry with a shorter milling time. The method disclosed herein includes a material preparing step of preparing a slurry-manufacturing-material including first inorganic oxide powder, a first milling step of milling the slurry-manufacturing-material using a first milling device including first media until the powder included in the slurry-manufacturing-material has an average particle diameter of 5 µm or more and 13 µm or less, and a second milling step of, after the first milling step, milling the slurry-manufacturing-material using a second milling device including second media with a smaller average particle diameter than the first media until the powder included in the slurry-manufacturing-material has an average particle diameter of 1 µm or less. Second inorganic oxide powder is mixed in the slurry-manufacturing-material before the first milling step, or after the first milling step and before the second milling step.

## Description

### [Technical Field]

The present invention relates to a method for preparing a slurry and a method for producing an exhaust gas purifying catalyst. The present application claims priority based on Japanese Patent Application No. 2022-048385 filed on March 24, 2022, the entire contents of which application are incorporated herein by reference.

### [Background Art]

The exhaust gas emitted from an internal-combustion engine such as a vehicle engine includes toxic exhaust gas components such as hydro-carbon (HC), carbon monoxide (CO), and nitrogen oxide (NOx). In view of this, an exhaust gas purifying catalyst including a catalyst metal that can purify the exhaust gas component through an oxidation or reduction reaction is disposed in an exhaust path from the internal-combustion engine.

The exhaust gas purifying catalyst typically includes a honeycomb base material including a plurality of cells, each of which serves as a flow channel of the exhaust gas, and a catalyst layer containing the catalyst metal and formed in the cell. In general, the catalyst layer is formed by coating a base material with a slurry including a catalyst metal and an inorganic oxide carrying the catalyst metal, and drying and firing the slurry. For example, Patent Literature 1 discloses a manufacturing method for an exhaust gas purifying catalyst, including milling catalyst metal powder and γ-Al₂O₃ as a wash-coat material and in the middle of this milling, adding a mixture (CeOz and ZrO₂-CeO₂) in a step of manufacturing a wash-coat slurry. Moreover, Patent Literature 2 discloses a technique of preparing a catalyst slurry including catalyst powder with a predetermined particle size distribution by employing wet grinding, dry grinding, or a combination of the wet grinding and the dry grinding in a step of preparing the catalyst slurry.

### [Citation List]

### [Patent Literatures]

[Patent Literature 1] Japanese Patent Application Publication No. H7-88384
[Patent Literature 2] WO 2018-159214

### [Summary of Invention]

Incidentally, in the preparation of the catalyst slurry, grinding the powder included in the catalyst slurry to a size of about 1 µm or less requires long milling. Since long milling deteriorates the productivity, a technique for shortening the milling time has been desired. One way to shorten the milling time is to decrease the diameter of media (for example, beads) used in the milling to bring the powder and the media in contact with each other more frequently. According to the present inventor's examination, however, the presence of a coarse particle in the powder leads to a problem that a slit for separating the powder and the media of a milling device may be clogged.

The present invention has been made in view of the above circumstances, and one object is to provide a method for preparing a slurry, in which a milling time is shortened. Another object is to provide a method for producing an exhaust gas purifying catalyst using such the method for preparing the slurry.

A method for preparing a slurry disclosed herein is a method for a slurry including first inorganic oxide powder, second inorganic oxide powder with a smaller average particle diameter than the first inorganic oxide powder, and a dispersion medium, and includes: a material preparing step of preparing a slurry-manufacturing-material including the first inorganic oxide powder; a first milling step of milling the slurry-manufacturing-material using a first milling device including first media until the powder included in the slurry-manufacturing-material has an average particle diameter of 5 µm or more and 13 µm or less based on a laser diffraction/scattering method; and a second milling step of, after the first milling step, milling the slurry-manufacturing-material using a second milling device including second media with a smaller average particle diameter than the first media until the powder included in the slurry-manufacturing-material has an average particle diameter of 1 µm or less based on the laser diffraction/scattering method. In addition, the second inorganic oxide powder is mixed in the slurry-manufacturing-material before the first milling step, or after the first milling step and before the second milling step.

Thus, the second milling is performed after the powder is miniaturized by the first milling until the powder becomes small enough not to clog a slit for separating the powder and the media of the second milling device. Thus, the milling efficiency is improved and the total milling time can be shortened.

In a preferred aspect of the method for preparing a slurry disclosed herein, the first media have an average particle diameter of 1 mm or more and 10 mm or less. Thus, the powder included in the slurry-manufacturing-material can be miniaturized to an average particle diameter of 5 µm or more and 13 µm or less efficiently; thus, the milling time can be shortened further.

In a preferred aspect of the method for preparing a slurry disclosed herein, the second media have an average particle diameter of 0.1 mm or more and 0.5 mm or less. Thus, the powder included in the slurry-manufacturing-material can be miniaturized to an average particle diameter of 1 µm or less easily; thus, the milling time can be shortened further.

In a preferred aspect of the method for preparing a slurry disclosed herein, before the second inorganic oxide powder is mixed, the second inorganic oxide powder has an average particle diameter of 5 µm or more and 13 µm or less based on the laser diffraction/scattering method. Thus, the slit clogging of the second milling device due to the second inorganic oxide powder can be suppressed.

In a preferred aspect of the method for preparing a slurry disclosed herein, a grinding method performed in the first milling step and the second milling step is wet grinding. Thus, aggregation of the powder in the slurry-manufacturing-material can be suppressed and the powder miniaturization efficiency is improved; thus, the milling time can be shortened further.

In a preferred aspect of the method for preparing a slurry disclosed herein, the second inorganic oxide powder is mixed before the first milling step. Thus, the first milling and the second milling can be performed continuously; thus, the milling time can be shortened further.

In a preferred aspect of the method for preparing a slurry disclosed herein, a slurry tank connected to the first milling device so that circulation is possible is further prepared and the milling is performed while the slurry-manufacturing-material is circulated between the first milling device and the slurry tank. Thus, the first milling can be performed while the average particle diameter of the powder included in the slurry-manufacturing-material is monitored; thus, the first milling can be switched to the second milling at a suitable timing. Accordingly, the milling time can be shortened further.

In a preferred aspect of the method for preparing a slurry disclosed herein, the slurry tank is connected to the second milling device so that the circulation is possible and the milling is performed while the slurry-manufacturing-material is circulated between the second milling device and the slurry tank. With such a structure, the milling can be performed continuously while the average particle diameter of the powder included in the slurry-manufacturing-material is monitored. Thus, the excessive milling can be prevented and accordingly, the milling time can be shortened further.

In a preferred aspect of the method for preparing a slurry disclosed herein, the slurry-manufacturing-material includes a catalyst metal functioning as a catalyst that can oxidize or reduce at least one kind of exhaust gas component. Thus, a catalyst-layer-formation-slurry for an exhaust gas purifying catalyst can be produced.

According to the present disclosure, moreover, a method for producing an exhaust gas purifying catalyst is provided. The method for producing an exhaust gas purifying catalyst disclosed herein is a method for producing an exhaust gas purifying catalyst for purifying exhaust gas emitted from an internal-combustion engine and includes: a step of preparing a catalyst-layer-formation-slurry by the method for preparing a slurry disclosed herein; a step of coating a base material with the catalyst-layer-formation-slurry; and a step of firing the base material coated with the catalyst-layer-formation-slurry.

### [Brief Description of Drawings]

Fig. 1 is a flowchart illustrating a rough process of a method for preparing a slurry according to a first embodiment.
Fig. 2 is a schematic diagram illustrating a structure of a slurry preparing apparatus according to one embodiment.
Fig. 3 is a flowchart illustrating a rough process of a method for preparing a slurry according to a second embodiment.
Fig. 4 is a flowchart illustrating a rough process of a method for producing an exhaust gas purifying catalyst according to one embodiment.
Fig. 5 is a perspective diagram schematically illustrating a structure of the exhaust gas purifying catalyst according to one embodiment.
Fig. 6 is a diagram schematically illustrating a cross section along a cylinder axis direction of an exhaust gas purifying catalyst according to one embodiment.
Fig. 7 is a graph illustrating a relation between an average particle diameter (D₅₀) of powder included in slurry-manufacturing-materials in Example 1, Example 2, Comparative Example 1, and Reference Example, and the milling time.
Fig. 8 is a graph illustrating a relation between an average particle diameter (D₅₀) of powder included in slurry-manufacturing-materials in Example 3 and Comparative Example 2, and the milling time.

### [Description of Embodiment]

The art disclosed herein will be described below with reference to the drawings as appropriate. Matters that are other than matters particularly mentioned in the present specification and that are necessary for the implementation of the present art can be grasped as design matters of those skilled in the art based on the prior art in the relevant field. The present art can be carried out based on the contents disclosed in this specification and technical knowledge in the relevant field. In the present specification, the numerical range "A to B (here, A and B are arbitrary numerals)" means "A or more and B or less" and also encompasses the meaning "more than A and less than B", "more than A and B or less", and "A or more and less than B".

A method for preparing a slurry disclosed herein including first inorganic oxide powder, second inorganic oxide powder whose average particle diameter is smaller than that of the first inorganic oxide powder, and a dispersion medium. One aspect of the method for preparing a slurry disclosed here includes: a material preparing step of preparing a slurry-manufacturing-material including the first inorganic oxide powder; a first milling step of milling the slurry-manufacturing-material using a first milling device including first media until the powder included in the slurry-manufacturing-material has an average particle diameter of 5 µm or more and 13 µm or less based on a laser diffiaction/scattering method; and a second milling step of, after the first milling step, milling the slurry-manufacturing-material using a second milling device including second media with a smaller average particle diameter than the first media until the powder included in the slurry-manufacturing-material has an average particle diameter of 1 µm or less based on the laser diffiaction/scattering method. Before the first milling step, or after the first milling step and before the second milling step, the second inorganic oxide powder is mixed with the slurry-manufacturing-material.

According to the present art, the second milling is performed after the powder is miniaturized by the first milling enough to make the slit of the second milling device for separating the media and the powder not easily clogged; thus, the milling efficiency is improved and the total milling time can be shortened. In addition, the first milling is completed at a timing when the average particle diameter of the powder included in the slurry-manufacturing-material based on the laser diffraction/scattering method becomes 5 µm or more and 13 µm or less; thus, the second milling can be started before the milling efficiency of the first milling deteriorates remarkably and therefore, the total milling time can be shortened.

### (First embodiment)

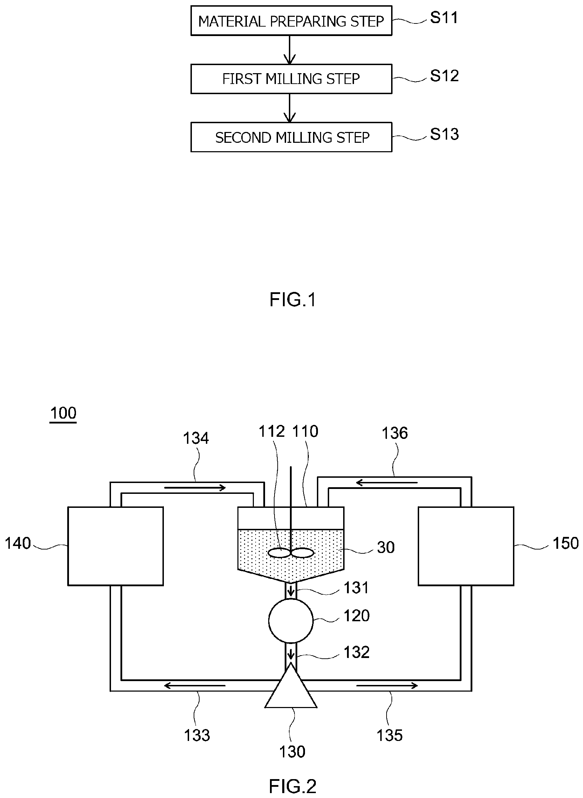

Fig. 1 is a flowchart illustrating a rough process of a method for preparing a slurry according to a first embodiment. This embodiment includes a material preparing step S11, a first milling step S12, and a second milling step S13.

In the material preparing step S11, the slurry-manufacturing-material including at least the first inorganic oxide powder is prepared. In the first embodiment, the slurry-manufacturing-material including the first inorganic oxide powder and the second inorganic oxide powder is prepared. Note that the first inorganic oxide powder and the second inorganic oxide powder prepared here are a raw material of a powder component included in the slurry to be prepared.

The average particle diameter of the first inorganic oxide powder (that is, before milling) that is prepared here is larger than that of the second inorganic oxide powder (before milling) that is prepared. The average particle diameter of the first inorganic oxide powder as described here is not limited in particular and may be, for example, 15 µm to 150 µm, 20 µm to 80 µm, or 30 µm to 60 µm. In this specification, "the average particle diameter" refers to a cumulative 50% particle diameter (D₅₀) in a particle size distribution based on the volume, which is measured using a particle size distribution measurement apparatus based on the laser diffiaction/scattering method unless otherwise stated.

The kind of first inorganic oxide powder is not limited in particular and can be changed as appropriate in accordance with the purpose of use of the slurry. For example, in a case of a catalyst-layer-formation-slurry of an exhaust gas purifying catalyst, an inorganic oxide capable of carrying a catalyst metal, an inorganic oxide with an oxygen storage capacity (OSC) capable of storing and releasing oxygen (such a material is called an OSC material), or the like is preferably used. Examples of the inorganic oxide capable of carrying the catalyst metal include alumina (Al₂O₃), ceria (CeO₂), zirconia (ZrO₂), silica (SiO₂), titania (TiO₂), and the like. In addition, rare-earth metal oxides such as yttria (Y₂O₃), alkali metal oxides, alkaline earth metal oxides, and the like can be given. Examples of the OSC material include a ceria-zirconia complex oxide (CZ or ZC complex oxide) and the like. Moreover, for example, an OSC material such as a ceria or a ceria-zirconia complex oxide to which a small amount of oxides containing yttrium (Y), lanthanum (La), niobium (Nb), praseodymium (Pr), and other rare-earth elements is added can be preferably employed.

The average particle diameter of the second inorganic oxide powder (that is, before milling) that is prepared is smaller than the average particle diameter of the first inorganic oxide powder that is prepared. The average particle diameter of the second inorganic oxide powder as described here is not limited in particular and may be, for example, 1 µm to 50 µm, 3 µm to 30 µm, or 5 µm to 13 µm.

The kind of second inorganic oxide powder can be changed as appropriate in accordance with the purpose of use of the slurry in particular. For example, in the case of the catalyst-layer-formation-slurry of the exhaust gas purifying catalyst, the kind given as the examples of the aforementioned first inorganic oxide powder may be employed. In one preferable example of the catalyst-layer-formation-slurry of the exhaust gas purifying catalyst, the inorganic oxide capable of carrying the catalyst metal (for example, alumina) is employed as the first inorganic oxide powder and the OSC material (for example, CZ complex oxide) is employed as the second inorganic oxide powder.

The slurry-manufacturing-material typically includes a dispersion medium. By containing the dispersion medium, wet grinding can be performed as the milling. Preferred examples of such a dispersion medium include water and an aqueous solvent such as deionized water. The ratio of the dispersion medium in the entire slurry-manufacturing-material may be, for example, 10 wt% to 90 wt% of the slurry-manufacturing-material, and is preferably 25 wt% to 75 wt% and more preferably 40 wt% to 60 wt% thereof.

When the dispersion medium is 100 wt%, the ratio of the first inorganic oxide powder is not limited in particular and may be, for example, 10 wt% to 90 wt%, 20 wt% to 70 wt%, or 30 wt% to 50 wt%. When the dispersion medium is 100 wt%, the ratio of the second inorganic oxide powder is not limited in particular and may be, for example, 10 wt% to 90 wt%, 20 wt% to 70 wt%, or 30 wt% to 50 wt%.

The slurry-manufacturing-material can further contain another component. For example, in the case of the catalyst-layer-formation-slurry of the exhaust gas purifying catalyst, the other component may be a catalyst metal that functions as a catalyst capable of oxidizing or reducing at least one kind of exhaust gas component, an auxiliary catalyst, a binder, a dispersant, a thickener, or the like. Examples of the catalyst metal include metals belonging to a platinum group element, such as palladium (Pd), rhodium (Rh), and platinum (Pt), and other metals that function as oxidation or reduction catalysts. Pd and Pt are excellent in purifying performance (oxidizing purifying capability) for carbon monoxide and hydro-carbon and Rh is excellent in purifying performance (reducing purifying capability) for NOx; thus, these are particularly preferable catalyst metals as a three-way catalyst. The catalyst metal may be mixed as powder or may be mixed as a raw material compound that generates a catalyst metal particle after firing (for example, water-soluble metal salt such as Pd nitrate or Rh nitrate). Examples of the auxiliary catalyst component include barium sulfate. Examples of the binder include alumina sol and silica sol.

In the first milling step S12, milling is performed using the first milling device including the first media until the average particle diameter of the powder included in the slurry-manufacturing-material becomes within a predetermined range. The predetermined range is preferably 5 µm or more and 13 µm or less and more preferably 10 µm or more and 13 µm or less. When the powder has an average particle diameter of 13 µm or less, the slit of the second milling device used in the second milling step S13 is not clogged easily. From the viewpoint of shortening the total milling time by performing the milling with media with smaller average particle diameter at an earlier timing, the average particle diameter of the powder is preferably 5 µm or more and more preferably 10 µm or more.

Examples of the first milling device include a ball mill, a bead mill, and the like, and the bead mill is preferably employed. The bead mill has a higher grinding power than the ball mill and thus, can shorten the milling time further.

For example, the average particle diameter of the first media included in the first milling device is preferably 1 mm to 10 mm, more preferably 1 mm to 3 mm, and still more preferably 1 mm to 2 mm. With such an average particle diameter, the powder included in the slurry-manufacturing-material can be miniaturized into the predetermined average particle diameter efficiently. Note that a value of the diameter of the commercially available media can be employed as the average particle diameter of the first media.

The material of the first media is not limited in particular and may be, for example, glass, alumina, zircon, zirconia, steel, or the like.

A method of grinding of the first milling device is not limited in particular and may be dry grinding, wet grinding, or the like. The wet grinding is preferable because the aggregation of powder can be suppressed and the powder miniaturization efficiency is improved, so that the milling time can be shortened further.

When the first milling device is a bead mill, the kind of stirring structure (agitator) of the bead mill is not limited in particular and may be a disc type, a pin type, an annular type, or the like. The direction of a grinding chamber (vessel) of the bead mill is not limited in particular and may be a vertical type or a horizontal type, for example.

Examples of a driving method for the first milling device include circulating driving, pass driving, batch driving, and the like, and the circulating driving is preferably employed. With the circulating driving, the first milling can be performed while monitoring the average particle diameter of the powder included in the slurry-manufacturing-material and accordingly, the first milling can be switched to the second milling at a suitable timing. Thus, the milling time can be shortened further.

In the second milling step S 13, milling is performed using the second milling device including the second media until the average particle diameter of the powder included in the slurry-manufacturing-material becomes 1 µm or less (for example, 0.1 µm to 0.6 µm). The powder included in the slurry-manufacturing-material to be supplied to the second milling device is miniaturized by the first milling to have the average particle diameter in the predetermined range. For this reason, the clogging of the slit of the second milling device is suppressed.

Examples of the second milling device include a ball mill, a bead mill, and the like, and the bead mill is preferably employed. The bead mill has a higher grinding power than the ball mill and thus, can shorten the milling time further.

The average particle diameter of the second media included in the second milling device is, for example, 0.1 mm to 0.5 mm. With such an average particle diameter, the average particle diameter of the powder included in the slurry-manufacturing-material can be miniaturized easily into 1 µm or less. Note that a value of the diameter of the commercially available media can be employed as the average particle diameter of the second media.

The material of the second media is not limited in particular and may be, for example, glass, alumina, zircon, zirconia, steel, or the like.

A method of grinding of the second milling device is not limited in particular and may be dry grinding, wet grinding, or the like. The wet grinding is preferable because the aggregation of powder can be suppressed and the powder miniaturization efficiency is improved, so that the milling time can be shortened further. When both the first milling device and the second milling device employ the wet grinding method, the first milling and the second milling can be performed continuously; thus, the time for preparing slurry can be shortened.

When the second milling device is a bead mill, the kind of stirring structure (agitator) of the bead mill is not limited in particular and may be a disc type, a pin type, an annular type, or the like. The direction of a grinding chamber (vessel) of the bead mill is not limited in particular and may be a vertical type or a horizontal type, for example.

Examples of a driving method for the second milling device include circulating driving, pass driving, batch driving, and the like, and the circulating driving is preferably employed. With the circulating driving, the milling can be performed continuously while monitoring the average particle diameter of the powder included in the slurry-manufacturing-material. Thus, the excessive milling can be prevented and the milling time can be further shortened accordingly.

The method in one embodiment has been described above; however, the method disclosed herein may further include another step at an optional stage. For example, the second milling step S13 may be followed by mixing of an optional component in the prepared slurry. Examples of the optional component include a binder, an antioxidant, a dispersant, a thickener, and the like. In the case of the catalyst-layer-formation-slurry of the exhaust gas purifying catalyst, additionally, a raw material compound that generates the catalyst metal particle after the firing, an auxiliary catalyst, or the like may be mixed.

Fig. 2 is a schematic diagram illustrating a structure of a slurry preparing apparatus according to one embodiment. The present art can be carried out using a slurry preparing apparatus 100 that is illustrated, for example. In this embodiment, the slurry preparing apparatus 100 includes a slurry tank 110, a pump 120, a first milling device 140, and a second milling device 150. In addition, the slurry preparing apparatus 100 according to this embodiment includes a switching element 130. The slurry tank 110 is connected to the pump 120 through a pipe 131. The pump 120 is connected to the switching element 130 through a pipe 132. The switching element 130 is connected to the first milling device 140 through a pipe 133 and the first milling device 140 is connected to the slurry tank 110 through a pipe 134. In this manner, the slurry tank 110 and the first milling device 140 are connected to each other so that circulation is possible, and thus, the circulating driving of the first milling device 140 is achieved. Moreover, as illustrated in the drawing, the switching element 130 is connected to the second milling device 150 through a pipe 135 and the second milling device 150 is connected to the slurry tank 110 through a pipe 136. In this manner, the slurry tank 110 and the second milling device 150 are connected to each other so that circulation is possible, and thus, the circulating driving of the second milling device 150 is achieved. The switching element 130 is configured to be able to switch between the connection to the pipe 133 and the connection to the pipe 135, and can switch which to connect the slurry tank 110 to the first milling device 140 or the second milling device 150. Note that the arrows in Fig. 2 indicate a direction where a slurry-manufacturing-material 30 can flow.

The slurry tank 110 is a tank for storing the slurry-manufacturing-material 30. The slurry tank 110 includes a stirring blade 112 by which the slurry-manufacturing-material 30 in the slurry tank 110 can be stirred.

The pump 120 functions as a driving power source for circulating the slurry-manufacturing-material 30, and can achieve the circulating driving for the slurry tank 110 and the first milling device 140 or the second milling device 150. In this embodiment, one pump 120 is provided before the switching element 130; however, one pump 120 may be provided between the switching element 130 and the first milling device 140 and another pump 120 may be provided between the switching element 130 and the second milling device 150, for example.

The switching element 130 is an element that is installed optionally and is not an essential structure. The provision of the switching element 130 makes it easy to switch between the first milling and the second milling, thereby shortening the milling time. Examples of the switching element 130 include a switching valve. Note that the circulation path between the slurry tank 110 and the first milling device 140 may be changed to the circulation path between the slurry tank 110 and the second milling device 150 by changing the connection of the pipes manually instead of providing the switching element 130.

In this embodiment, two devices, that is, the first milling device 140 and the second milling device 150 are arranged in parallel. This arrangement makes it possible to perform the first milling step S12 and the second milling step S13 continuously, thereby contributing to shortening of the slurry preparing time. Note that the first milling device 140 is a device used in the first milling step S12 and may be similar to the aforementioned device. Note that the second milling device 150 is a device used in the second milling step S13 and may be similar to the aforementioned device.

In the slurry preparing apparatus 100, the average particle diameter of the powder included in the slurry-manufacturing-material can be monitored while performing the first milling step S12 or the second milling step S13. For example, a part of the slurry-manufacturing-material in the slurry tank 110 may be extracted as appropriate and the particle diameter may be monitored in-line.

### (Second embodiment)

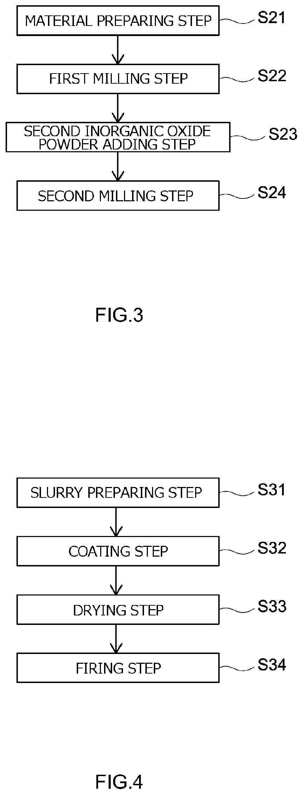

Fig. 3 is a flowchart illustrating a rough process of a method for preparing a slurry according to a second embodiment. The second embodiment includes a material preparing step S21, a first milling step S22, a second inorganic oxide powder adding step S23, and a second milling step S24. In the first embodiment described above, the slurry-manufacturing-material including the first inorganic oxide powder and the second inorganic oxide powder are prepared in the material preparing step S11 before the first milling step S12. In the second embodiment, on the other hand, the slurry-manufacturing-material including the first inorganic oxide powder is prepared in the material preparing step S21, and after the first milling step S22 and before the second milling step S24, the second inorganic oxide powder is mixed in the slurry-manufacturing-material. Thus, the excessive miniaturization of the second inorganic oxide powder, whose average particle diameter is smaller than that of the first inorganic oxide powder, can be suppressed. The matters in the material preparing step S21 in the second embodiment other than the second inorganic oxide powder may be similar to those in the material preparing step S11 described above. The first milling step S22 may be similar to the first milling step S12 described above, and the second milling step S24 may be similar to the second milling step S13 described above.

In the second embodiment, the second inorganic oxide powder is not subjected to the first milling; therefore, from the viewpoint of preventing the clogging of the slit in the second milling device in the second milling, the average particle diameter of the second inorganic oxide powder is preferably 5 µm to 13 µm.

The method for preparing a slurry disclosed herein is employed preferably as a method for preparing the catalyst-layer-formation-slurry of the exhaust gas purifying catalyst that purifies the exhaust gas emitted from an internal-combustion engine. In view of this, the present disclosure provides a method for producing an exhaust gas purifying catalyst including the method for preparing a slurry disclosed herein.

Fig. 4 is a flowchart illustrating a rough process of a method for producing an exhaust gas purifying catalyst according to one embodiment. The method for producing an exhaust gas purifying catalyst disclosed herein includes a step of preparing the catalyst-layer-formation-slurry (hereinafter also referred to as "slurry preparing step S3 1"), a step of coating a base material with the catalyst-layer-formation-slurry (hereinafter also referred to as "coating step S32"), and a step of firing the base material coated with the catalyst-layer-formation-slurry (hereinafter also referred to as "firing step S34"). In addition, as illustrated in Fig. 4, a drying step S33 of drying the base material coated with the catalyst-layer-formation-slurry may be included. The exhaust gas purifying catalyst disclosed herein may further include another step at an optional stage.

In the slurry preparing step S31, the catalyst-layer-formation-slurry may be prepared by the method for preparing a slurry disclosed herein. The catalyst-layer-formation-slurry, which includes the powder with an average particle diameter of 1 µm or less, is typically used to form the catalyst layer inside a porous partition wall preferably, and also usable to form the catalyst layer on a surface of the partition wall.

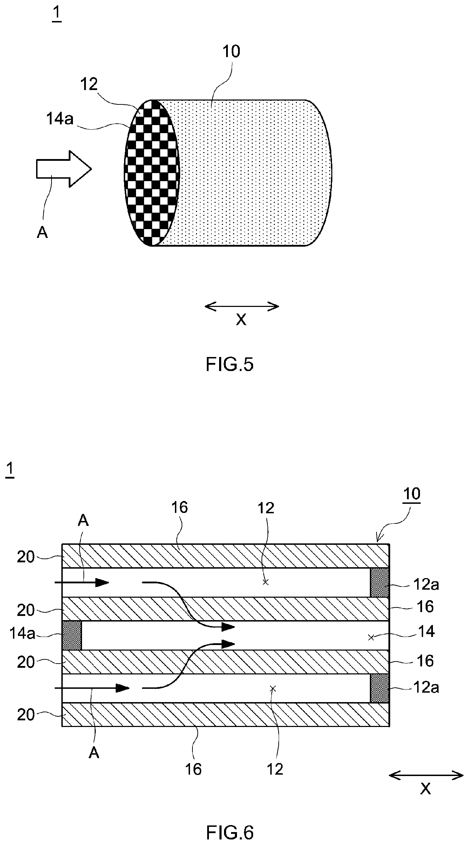

In the coating step S32, the base material forming a frame of the exhaust gas purifying catalyst is coated with the catalyst-layer-formation-slurry. Fig. 5 is a perspective diagram schematically illustrating a structure of the exhaust gas purifying catalyst according to one embodiment. Fig. 6 is a diagram schematically illustrating a cross section along a cylinder axis direction of an exhaust gas purifying catalyst 1 according to one embodiment. A reference sign A in the drawing indicates a flowing direction A of the exhaust gas. The base material prepared here may be a base material 10 with a circular cylindrical shape extending along the flowing direction A of the exhaust gas as illustrated in Fig. 5. The base material 10 can have a honeycomb structure in which a plurality of cells serving as flow channels of a fluid (for example, exhaust gas) are aggregated. Note that the outer shape of the base material is not limited to the circular cylindrical shape and may be an elliptical cylindrical shape, a polygonal cylindrical shape, or the like. Moreover, the total length or capacity of the base material 10 is not limited in particular either, and can be changed as appropriate depending on the performance, size, or the like of the internal-combustion engine. In addition, a conventionally known material that can be used for the base material of the exhaust gas purifying catalyst can be used for the base material 10, without particular limitations. Examples of the material of the base material 10 include ceramics such as cordierite, silicon carbide (SiC), and aluminum titanate, and materials with high heat resistance typified by alloys such as stainless steel. For example, cordierite can be used particularly preferably as the material of the base material of the exhaust gas purifying catalyst for a gasoline engine to which the hightemperature exhaust gas tends to be supplied because cordierite has excellent durability against thermal impact.

The base material 10 can be a wall-flow type base material as illustrated in Fig. 6. Specifically, as illustrated in Fig. 5 and Fig. 6, the base material 10 includes an upstream side cell 12 whose only end part on an exhaust gas upstream side is open, an downstream side cell 14 whose only end part on an exhaust gas downstream side is open, and a porous partition wall 16 that sections between the upstream side cell 12 and the downstream side cell 14. Specifically, the upstream side cell 12 is a gas flow channel whose end part on the exhaust gas upstream side is open and whose end part on the exhaust gas downstream side is closed by a sealing part 12a. On the other hand, the downstream side cell 14 is a gas flow channel whose end part on the exhaust gas upstream side is closed by a sealing part 14a and whose end part on the exhaust gas downstream side is open. The partition wall 16 is a partition material including a plurality of pores through which the exhaust gas can pass. This partition wall 16 includes a plurality of pores that communicate between the upstream side cell 12 and the downstream side cell 14. In the exhaust gas purifying catalyst 1 illustrated in Fig. 5, the shape of the upstream side cell 12 (downstream side cell 14) at a cross section perpendicular to the extending direction (cylinder axis direction X) of the partition wall 16 is a square. However, the shape of the upstream side cell (downstream side cell) at the cross section perpendicular to the extending direction is not limited to a square and various shapes can be employed. For example, the shape may be a rectangular shape such as a parallelogram, a rectangle, or a trapezoid, a triangular shape, another polygonal shape (such as a hexagon or an octagon), a circular shape, or other various geometric shapes.

Note that the partition wall 16 of the base material 10 is formed preferably in consideration of the particulate matter (PM) capturing performance, the pressure loss suppressing performance, or the like. For example, the partition wall 16 has a thickness of preferably about 100 µm to 350 µm. Additionally, the partition wall 16 has a porosity of preferably about 20 vol% to 70 vol%, and more preferably 50 vol% to 70 vol%. From the viewpoint of securing the air permeation of the partition wall 16 sufficiently to suppress the increase in pressure loss, the average pore diameter of the pores is preferably 8 µm or more, more preferably 12 µm or more, and still more preferably 15 µm or more. On the other hand, from the viewpoint of securing the suitable PM capturing performance, the upper limit value of the average pore diameter of the pores is preferably 30 µm or less, more preferably 25 µm or less, and still more preferably 20 µm or less. Note that the porosity and the average pore diameter of the partition wall 16 are the values measured by mercury porosimetry.

Note that the base material is not limited to the wall-flow type and may alternatively be a so-called straight-flow type base material in which a plurality of penetration holes are aggregated.

A method of coating the base material 10 with the catalyst-layer-formation-slurry may be similar to methods that have conventionally been employed in this type of technique, and may be, for example, a wash coat method, a suction coat method, or the like. In the wash coat method, after the base material 10 is immersed in the catalyst-layer-formation-slurry, the base material 10 is extracted, and the excessive slurry is removed with an air blow; thus, the base material 10 can be coated with the catalyst-layer-formation-slurry. In the suction coat method, the catalyst-layer-formation-slurry is supplied to an end part of the base material 10 and by sucking from the other end part to make the slurry get into the base material 10, the base material 10 can be coated with the catalyst-layer-formation-slurry. Note that, at this time, by adjusting the range to immerse the catalyst-layer-formation-slurry or adjusting the suction time, the arrangement of a catalyst layer 20 to be formed can be adjusted.

In addition, the thickness of the catalyst layer can be adjusted as appropriate by the viscosity of the catalyst-layer-formation-slurry. For example, the viscosity measured at a rotation speed of 1 to 100 rpm, at room temperature (25°C), and a shear rate of 380 s⁻¹ using a commercially available cone-plate viscometer is suitably about 10 mPa to 1000 mPa.

The drying step S33 can be performed under the conditions similar to those in the drying that has conventionally been performed in this type of technique, without particular limitations. For example, the drying can be performed at a temperature of 50°C to 200°C for about 1 to 30 minutes.

The firing step S34 can be performed under the conditions similar to those in the firing that has conventionally been performed in this type of technique, without particular limitations. For example, the firing can be performed at a temperature of 400°C to 1000°C for about 30 seconds to 5 hours.

In this manner, for example, the exhaust gas purifying catalyst 1 as illustrated in Fig. 6 can be produced. In the exhaust gas purifying catalyst 1 illustrated in Fig. 6, the catalyst layer 20 is formed inside the partition wall 16 and the catalyst layer 20 is formed along the entire length of the partition wall 16 in the cylinder axis direction X and the entire thickness of the partition wall 16 that is orthogonal to the cylinder axis direction X; however, this is just one example and the exhaust gas purifying catalyst to be produced is not limited to this. For example, the catalyst layer 20 may be formed on the surface of the partition wall 16. Moreover, the catalyst layer 20 may be formed at a predetermined ratio (for example, 10% to 90%) of the entire length of the partition wall 16 in the cylinder axis direction X. Moreover, the exhaust gas purifying catalyst 1 may include a second catalyst layer with a composition different from that of the catalyst layer 20 at a position different from the catalyst layer 20.

The exhaust gas purifying catalyst 1 can be used for various purposes depending on the composition of the catalyst layer 20, and for example, can be used as a three-way catalyst, a NOx catalyst, an oxidation catalyst, a reduction (SCR) catalyst, or an ammonia slip catalyst (ASC).

Although some examples related to the art disclosed herein will be described below, it is not intended to limit the art disclosed herein to those described in these examples.

### (Test 1)

### [Preparation of slurry-manufacturing-material]

Alumina powder (average particle diameter: about 32 µm), ceria-zirconia complex oxide (CZ complex oxide) powder (average particle diameter: about 12.8 µm), Pd nitrate, and water were mixed to prepare the slurry-manufacturing-material. Such a slurry-manufacturing-material was prepared so as to satisfy the configuration with a mass ratio of alumina powder:CZ complex oxide powder:Rh nitrate:water = 20:23 :2:55. The average particle diameter (D₅₀) of the powder included in the slurry-manufacturing-material as described above was measured with a particle size distribution measurement device based on the laser diffraction/scattering method and the results are shown in Table 1 as an initial particle diameter. Using such a slurry-manufacturing-material, milling in the following Examples 1 and 2, Comparative Example 1, and Reference Example was performed. The slurry to be prepared contained the powder with an average particle diameter (D₅₀) of 0.6 µm or less.

### <Example 1>

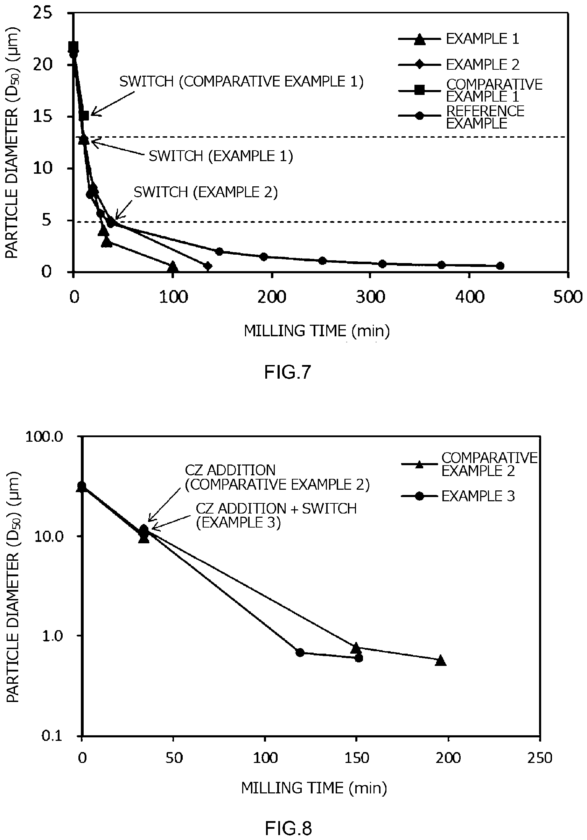

As the milling device for the first milling, a first bead mill including zirconia beads (first media) with a diameter of 1 mm was prepared. As the milling device for the second milling, a second bead mill including zirconia beads (second media) with a diameter of 0.5 mm was prepared. In addition, the slurry tank filled with the prepared slurry-manufacturing-material was prepared. This slurry tank was connected to the first bead mill so that the filling slurry-manufacturing-material can circulate. Similarly, the slurry tank was connected to the second bead mill so that the filling slurry-manufacturing-material can circulate. Note that a switch valve was disposed so as to be able to switch between the circulation path between the slurry tank and the first bead mill and the circulation path between the slurry tank and the second bead mill. First, the slurry-manufacturing-material was supplied from the slurry tank to the first bead mill and the first milling was performed. After the first milling was performed until the average particle diameter (D₅₀) of the powder included in the slurry-manufacturing-material became 12.88 µm, the circulation path was changed to the circulation path with the second bead mill and thus, the second milling was performed. The second milling was performed until the average particle diameter (D₅₀) of the powder included in the slurry-manufacturing-material became 0.6 µm. In this manner, the slurry was prepared. Note that the average particle diameter of the powder included in the slurry-manufacturing-material was measured with the particle size distribution measurement apparatus based on the laser diffraction/scattering method in such a way that a part of the slurry-manufacturing-material in the milling was collected. Fig. 7 is a graph illustrating the relation between the average particle diameter (D₅₀) and the milling time. Note that the results in the respective examples given below are similarly shown in Fig. 7. Moreover, Table 1 shows the results of the milling conditions, the particle diameter based on the particle size distribution of the powder included in the slurry-manufacturing-material at the time when the first milling ended, and the average particle diameter (D₅₀) at the time when the second milling ended. Note that the milling conditions and the results in the respective examples given below are similarly shown in Table 1.

### <Example 2>

The slurry was prepared in a manner similar to Example 1 except that the timing to switch the first milling to the second milling was changed to the time when the average particle diameter (D₅₀) of the powder included in the slurry-manufacturing-material became 5 µm.

### <Comparative Example 1>

The process was performed in a manner similar to Example 1 except that the timing to switch the first milling to the second milling was changed to the time when the average particle diameter (D₅₀) of the powder included in the slurry-manufacturing-material became 15.12 µm. However, the second milling was stopped because the slit of the second bead mill was clogged.

### <Reference Example>

With the first bead mill, the milling was performed until the average particle diameter (D₅₀) of the powder included in the slurry-manufacturing-material became 0.5 µm and thus, the slurry was prepared. That is to say, in Reference Example, the slurry was prepared with one bead mill including zirconia beads with a diameter of 1 mm.

### [Table 1]

**Table 1**

| | Initial particle diameter (D₅₀) (µm) | First milling end particle diameter (D₅₀) (µm) | First milling bead diameter (mm) | Second milling end particle diameter (D₅₀) (µm) | Second milling bead diameter (mm) | Total milling time (min) |
|---|---|---|---|---|---|---|
| Example 1 | 21.74 | 12.88 | 1.0 | 0.6 | 0.5 | 100 |
| Example 2 | 21.74 | 5.00 | 1.0 | 0.6 | 0.5 | 136 |
| Comparative Example 1 | 21.74 | 15.12 | 1.0 | - | 0.5 | - |
| Reference Example | 20.95 | 0.50 | 1.0 | - | - | 432 |

Fig. 7 and Table 1 indicate that the total milling time was drastically shortened in Examples 1 and 2 in which two bead mills including the first bead mill with a bead size of 1 mm and the second bead mill with a bead size of 0.5 mm were used compared to Reference Example in which the milling was performed using one bead mill with a bead size of 1 mm until the predetermined average particle diameter (here, 0. 5 mm) was obtained. However, when the first milling was switched to the second milling, if the powder in the slurry-manufacturing-material had too large average particle diameter, the slit of the second bead mill was clogged, as described in Comparative Example 1. Therefore, as described in Examples 1 and 2, the timing to switch the first milling to the second milling is preferably the time when the first milling was performed until the powder in the slurry-manufacturing-material had an average particle diameter of 5 µm to 13 µm.

### (Test 2)

### [Preparation of slurry-manufacturing-material]

Alumina powder (average particle diameter: about 32 µm) and water were mixed to prepare the slurry-manufacturing-material. Such a slurry-manufacturing-material was prepared so as to satisfy the configuration with a mass ratio of alumina powder:water = 20:55. Table 2 shows, as the initial particle diameter, the result of measuring the average particle diameter (D₅₀) of the powder included in the slurry-manufacturing-material with the particle size distribution measurement apparatus based on the laser diffraction/scattering method. Using this slurry-manufacturing-material, the milling according to Example 3 and Comparative Example 2 below was performed. The slurry to be prepared contained the powder with an average particle diameter (D₅₀) of 0.6 µm or less.

### <Example 3>

The first bead mill and the second bead mill that are the same as those in Example 1, and the slurry tank filled with the prepared slurry-manufacturing-material were prepared. This slurry tank was connected to the first bead mill so that the slurry-manufacturing-material can circulate. Similarly, the slurry tank was connected to the second bead mill so that the filling slurry-manufacturing-material can circulate. Note that the slurry tank was configured to be able to switch between the circulation path with the first bead mill and the circulation path with the second bead mill at a desired timing. First, the slurry-manufacturing-material was supplied from the slurry tank to the first bead mill to perform the first milling. The first milling was performed until the powder in the slurry-manufacturing-material had an average particle diameter (D₅₀) of 10.40 µm. After that, the CZ complex oxide powder (average particle diameter: about 12.8 µm) was added to the slurry-manufacturing-material after the first milling, so that the mass ratio became alumina powder:CZ complex oxide powderwater = 20:25:55. The average particle diameter (D₅₀) of the powder included in the slurry-manufacturing-material after the CZ oxide was added was 11.76 µm. Next, the circulation path was switched to the circulation path with the second bead mill to perform the second milling. The second milling was performed until the powder in the slurry-manufacturing-material had an average particle diameter (D₅₀) of 0.6 µm. The slurry was prepared in this manner. Note that the average particle diameter of the powder included in the slurry-manufacturing-material was measured with the particle size distribution measurement apparatus based on the laser diffraction/scattering method in such a way that a part of the slurry-manufacturing-material in the milling was collected. Fig. 8 is a graph illustrating the relation between the average particle diameter (D₅₀) and the milling time. In Fig. 8, there are two plots in a milling time of 34 minutes, which indicates before and after the mixing of the CZ complex oxide, and it is shown that the average particle diameter becomes larger after the mixing of the CZ complex oxide. Moreover, Table 2 shows the results of the milling conditions, the particle diameter based on the particle size distribution of the powder included in the slurry-manufacturing-material at the time when the first milling ended (before the CZ complex oxide was mixed), and the average particle diameter (D₅₀) at the time when the second milling ended.

### <Comparative Example 2>

The milling was performed using only the first bead mill, which is similar to Reference Example. After the milling was performed until the powder included in the slurry-manufacturing-material had an average particle diameter (D₅₀) of 9.8 µm, the CZ complex oxide was added to the slurry-manufacturing-material so that the mass ratio became alumina powder:CZ complex oxide:water = 20:25:55. Then, the milling using the first bead mill was performed subsequently until the powder included in the slurry-manufacturing-material had an average particle diameter (D₅₀) of 0.58 µm. The results are shown in Fig. 8 and Table 2. Note that in Comparative Example 2, the milling by the first bead mill after the CZ complex oxide powder was mixed is referred to as the second milling.

### [Table 2]

**Table 2**

| | Initial particle diameter (D₅₀) (µm) | First milling end particle diameter (D₅₀) (µm) | First milling bead diameter (mm) | Second milling end particle diameter (D₅₀) (µm) | Second milling bead diameter (mm) | Total milling time (min) |
|---|---|---|---|---|---|---|
| Example 3 | 32.28 | 10.40 | 1.0 | 0.6 | 0.5 | 151 |
| Comparative Example 2 | 31.93 | 9.80 | 1.0 | 0.58 | 1 | 196 |

Table 2 and Fig. 8 indicate that the total milling time was shortened by performing the second milling with the beads that were smaller than those used in the first milling even in the case where the CZ complex oxide with the smaller average particle diameter than the alumina powder was mixed after the first milling.

Although specific examples of the art disclosed herein have been described in detail above, they are merely examples and do not limit the scope of claims. The techniques described in the scope of claims include those in which the specific examples exemplified above are variously modified and changed.

## Claims

1. A method for preparing a slurry including first inorganic oxide powder, second inorganic oxide powder with a smaller average particle diameter than the first inorganic oxide powder, and a dispersion medium, the method comprising:
a material preparing step of preparing a slurry-manufacturing-material including the first inorganic oxide powder;
a first milling step of milling the slurry-manufacturing-material using a first milling device including first media until the powder included in the slurry-manufacturing-material has an average particle diameter of 5 µm or more and 13 µm or less based on a laser diffraction/scattering method; and
a second milling step of, after the first milling step, milling the slurry-manufacturing-material using a second milling device including second media with a smaller average particle diameter than the first media until the powder included in the slurry-manufacturing-material has an average particle diameter of 1 µm or less based on the laser diffraction/scattering method, wherein
the second inorganic oxide powder is mixed in the slurry-manufacturing-material before the first milling step, or after the first milling step and before the second milling step.

2. The method according to claim 1, wherein the first media have an average particle diameter of 1 mm or more and 10 mm or less.

3. The method according to claim 1 or 2, wherein the second media have an average particle diameter of 0.1 mm or more and 0.5 mm or less.

4. The method according to any one of claims 1 to 3, wherein before the second inorganic oxide powder is mixed, the second inorganic oxide powder has an average particle diameter of 5 µm or more and 13 µm or less based on the laser diffraction/scattering method.

5. The method according to any one of claims 1 to 4, wherein a grinding method performed in the first milling step and the second milling step is wet grinding.

6. The method according to any one of claims 1 to 5, wherein the second inorganic oxide powder is mixed before the first milling step.

7. The method according to any one of claims 1 to 6, wherein connecting a slurry tank to the first milling device and the milling is performed while the slurry-manufacturing-material is circulated between the first milling device and the slurry tank.

8. The method according to claim 7, wherein connecting the slurry tank to the second milling device and the milling is performed while the slurry-manufacturing-material is circulated between the second milling device and the slurry tank.

9. The method according to any one of claims 1 to 8, wherein the slurry-manufacturing-material includes a catalyst metal functioning as a catalyst that can oxidize or reduce at least one kind of exhaust gas component.

10. A method for producing an exhaust gas purifying catalyst for purifying exhaust gas emitted from an internal-combustion engine, the method comprising:
a step of preparing a catalyst-layer-formation-slurry by the method according to claim 9;
a step of coating a base material with the catalyst-layer-formation-slurry; and
a step of firing the base material coated with the catalyst-layer-formation-slurry.
